# EUROPÄISCHE PATENTSCHRIFT

(11) **EP 2 913 989 B1**
(45) Veröffentlichungstag und Bekanntmachung des Hinweises auf die Patenterteilung: **29.05.2019**
(21) Anmeldenummer: 15154340.2
(22) Anmeldetag: 09.02.2015
(51) Int. Cl.: G06Q 20/16, G01C 21/36, H04M 1/725, H04M 15/00

(54) **Bindung eines Terminals an ein mobiles Endgerät zum Zweck der Kostenzuweisung**
Linking a terminal to a mobile device for the purpose of cost assignment
Liaison d'un terminal à un dispositif mobile pour l'attribution de frais

(30) Priorität: 28.02.2014 DE 102014203717
(43) Veröffentlichungstag der Anmeldung: 02.09.2015
(73) Patentinhaber: Vodafone GmbH, 40549 Düsseldorf (DE)
(72) Erfinder: Bothe, Andreas, 50354 Hürth (DE)
(74) Vertreter: Jostarndt Patentanwalts-AG

(56) Entgegenhaltungen:
- EP-A1- 2 661 062
- WO-A1-2010/040411
- WO-A1-2011/053357
- WO-A2-2012/047932
- US-A- 5 991 749
- US-A1- 2003 096 591
- US-A1- 2010 273 424
- US-A1- 2012 221 437
- US-A1- 2013 316 672

## Beschreibung

### Gebiet der Erfindung

Die Erfindung bezieht sich auf ein Verfahren zur Datenübermittlung, einen entsprechend angepassten Terminal zur Datenübermittlung und ein System zur Datenübermittlung.

### Hintergrund der Erfindung

Die US 2013/0276036 A1 offenbart ein mobiles Unterhaltungssystem, das in einem Kraftfahrzeug befestigt ist. Das Unterhaltungssystem ist dazu eingerichtet Inhalte an einem Zugangspunkt kabellos von einer externen Quelle abzurufen und zu speichern. Die Bezahlung der Inhalte erfolgt durch Eingabe entsprechender Zahlungsinformationen.

Das beschriebene Verfahren ist umständlich und erschwert die Akzeptanz von entgeltlichen datenbasierten Dienstleistungen.

Die US 2012/0221437 A1 offenbart Systeme und Verfahren, um bestimmte soziale Netzwerkaktivitäten als Reaktion auf Zahlungen über Mobilkommunikation automatisch zu verarbeiten.

Die US 5,991,749 offenbart Verfahren zur Verwendung von Mobiltelefonen und anderen analogen oder digitalen drahtlosen Kommunikationsgeräten, um Transaktionen und Aktivitäten durchzuführen.

Die WO 2011/053357 A1 offenbart eine Zugriffskontrolle auf ein Fahrzeug. Das System umfasst eine Fahrzeugzugangssteuerungskomponente, die konfiguriert ist, den Zugang zu einem Fahrzeug und einer Kommunikationsschnittstelle zur Kommunikation mit einer drahtlosen Kommunikationsvorrichtung bereitzustellen.

Die US 2010/273424 A1 offenbart ein Verfahren, das es ermöglicht, einen Dienst über ein mobiles Endgerät abzurufen, ohne dass für diesen Dienst gezahlt werden muss.

### Zusammenfassung der Erfindung

Es ist eine Aufgabe der vorliegenden Erfindung, ein Verfahren zur Verfügung zu stellen, das die Übermittlung und Abrechnung von datenbasierten Dienstleistungen vereinfacht.

Diese Aufgabe wird durch ein Verfahren zur Erbringung von datenbasierten Dienstleistungen mittels eines Terminals gelöst, wobei der Terminal an ein Fahrzeug koppelbar ist. Das Verfahren umfasst die folgenden Verfahrensschritte:
- Identifizieren eines mobilen Endgerätes eines Nutzers;
- Identifizieren des Terminals;
- Bindung des Terminals an das mobile Endgerät, so dass es ermöglicht wird über den Terminal datenbasierte Dienstleistungen mittels einer kabellosen Verbindung zwischen einer Datenaustauscheinheit des Terminals und einer Datenübermittlungseinheit abzurufen, wobei das mobile Endgerät nicht aktiv in die Datenübermittlung zur Erbringung der datenbasierten Dienstleistung eingebunden ist, und die mit diesen datenbasierten Dienstleistungen verbundenen Kosten dem mobilen Endgerät zuzuweisen, wobei die Bindung an eine Präsenz des mobilen Endgerätes in einer definierten Umgebung des Fahrzeugs gebunden ist, wenn der Terminal an das Fahrzeug gekoppelt ist.

Die Bindung des Terminals an das mobile Endgerät ermöglicht es z.B. über die Telefonrechnung des Nutzers des mobilen Endgerätes auf einfache Weise datenbasierte Dienstleistungen abzurechnen. Dabei ist es nicht erforderlich, dass das mobile Endgerät aktiv in die Transaktion bzgl. der datenbasierten Dienstleistung eingebunden ist.

Alternativ kann die Bindung auch auf einem Server eines externen Dienstleisters wie z.B. dem Mobilfunkdienstleiser hinterlegt sein. So kann z.B. auf diesem Server gespeichert sein, dass z.B. die Kosten für Musikdateien, die von einem bestimmten Terminal, der sich mit einer Terminalkennung zu erkennen gibt, heruntergeladen werden, basierend auf der Bindung an ein mobiles Endgerät, der Rechnung des mobilen Endgerätes zugeordnet werden. Der Terminal könnte ein Multimediagerät eines Autos sein, wobei dieses Multimediagerät ein Navigationsgerät umfassen könnte. Es wird in diesem Fall somit mittels des externen Servers überprüft, welcher Art die angeforderten Daten sind und ob in Abhängigkeit von angeforderten Daten die Bindung zum mobilen Endgerät des Nutzers zum Tragen kommt, um die Bereitstellung und Übermittlung der Daten z.B. mit der Mobiltelefonrechnung abrechnen zu können. Entsprechen die angeforderten Daten einem definierten Profil so werden die diesbezüglichen Kosten über die Mobiltelefonrechnung abgerechnet.

In einer weiteren Alternative kann der Terminal ein transportables Navigationsgerät sein, das an ein Fahrzeug (Auto, Motorrad etc.) gekoppelt werden kann. Das Navigationsgerät kann z.B. mittels eines Bluetooth-Moduls mit einer Ticketeinheit eines Parkhauses kommunizieren. Die Ticketeinheit stellt die Buchung eines Parktickets als datenbasierte Dienstleistung zur Verfügung. Das Ticket kann nun automatisch durch das Navigationsgerät gebucht werden oder nachdem der Nutzer des Navigationsgerätes z.B. über das Display des Navigationsgerätes oder akustisch die Buchung freigegeben hat. Nach erfolgter Freigabe wird ggfs. verschlüsselt eine Kennung des Navigationsgerätes und eine Kennung des mobilen Endgeräts (Mobiltelefon, Smartphone etc.) des Nutzers des Navigationsgerätes übermittelt. Des Weiteren wird entweder mittels der Kennung des mobilen Endgerätes (z.B. IMSI) oder mit einer zusätzlich übermittelten Information der Mobilfunkanbieter des Nutzers des mobilen Endgerätes ermittelt. Die Ticketeinheit leitet die beiden aneinander gebundenen Kennungen an den Mobilfunkanbieter weiter und stellt gleichzeitig mit der Übermittlung der gebundenen Kennungen die Kosten für das Parkticket in Rechnung. Die Mobilfunkrechnung des Nutzers kann nun automatisch aufgrund der Kennung des mobilen Endgerätes mit den Kosten belastet werden. Als zusätzliche Schritte kann eine Information des Nutzers über die Belastung z.B. mittels SMS erfolgen. Eine solche SMS kann aber auch zusätzlich zur Autorisierung der Belastung der Mobilfunkrechnung herangezogen werden. Der Nutzer müsste in diesem Fall z.B. eine Antwort-SMS schicken um die Belastung zu autorisieren. Im Rahmen der Antwort-SMS könnte zudem eine Authentifizierung des Nutzers z.B. via PIN erfolgen.

Wie die Beispiele zeigen, ist von dem Begriff Terminal jede Einheit umfasst, die zur Übermittlung oder Vermittlung von datenbasierten Dienstleistungen geeignet ist. So könnte z.B. auch ein Tablet Computer der über keine eigene SIM-Karte verfügt mittels der logischen Bindung an ein mobiles Endgerät, wie z.B. ein Smartphone mit USIM, im Zug über eine kabellose Verbindung datenbasierte Dienstleistungen, wie z.B. Unterhaltungsfilme, abrufen und diese mittels der logischen Bindung ohne zusätzliche Angaben von z.B. Kreditkarteninformationen mit der Mobilfunkrechnung abrechnen. Die logische Bindung kann dabei im Terminal abgelegt sein oder aber durch einen externen Dienstleister erfolgen. Der externe Dienstleister kann dabei z.B. der Mobilfunkanbieter des Nutzers des mobilen Endgerätes sein oder aber eine unabhängige Institution. Es muss lediglich gewährleistet sein, dass lückenlos für alle Beteiligten nachvollziehbar ist, an wen Daten weiteregeleitet werden müssen, und von wem Daten zur Abwicklung der Belastung der Kosten an den Nutzer erhalten werden müssen.

Der Begriff datenbasierte Dienstleistungen umfasst sowohl die entgeltliche Übermittlung von Daten (Musik, Videos etc.) als auch den Austausch von Daten zum Zwecke der Abwicklung eines Geschäfts (Parkticket, Tickets für den Öffentlichen Nahverkehr, Bestellung von Waren etc.).

Bevor die Bindung zwischen dem Terminal und dem mobilen Endgerät erfolgt, wird die Bindung bevorzugt durch den Nutzer des mobilen Endgerätes autorisiert. Die Autorisierung verhindert, dass eine Bindung ohne Wissen des Nutzers erfolgen kann. Die Autorisierung kann z.B. durch Eingabe einer PIN am Mobilfunkgerät erfolgen bevor z.B. die IMSI an den Terminal übermittelt wird, um die Bindung einzurichten. Alternativ könnte der Nutzer sich z.B. bei seinem Mobilfunkanbieter in einem geschützten Bereich anmelden und z.B. einen oder mehrere Terminals identifizieren, die an eins seiner mobilen Endgeräte gebunden sein sollen. Des Weiteren könnte der Nutzer spezifizieren welche Art von datenbasierten Dienstleistungen mittels der Bindung abgerechnet werden können. Optional könnte er auch den Sicherheitsstandard definieren unter der eine auf der Bindung basierende Belastung der Kosten erfolgen darf (automatisch, SMS, PIN etc....).

Die Identifizierung des mobilen Endgeräts könnte in einer Ausführungsform durch eine Eingabe am mobilen Endgerät erfolgen, und die Identifizierung des Terminals durch Empfang einer ersten Terminalkennung des Terminals am mobilen Endgerät erfolgen. Die Eingabe kann dabei über eine Tastatur, akustisch, optisch oder in einer ansonsten geeigneten Form erfolgen. So kann der Nutzer des mobilen Endgerätes z.B. über ein Menü den Menüpunkt Bindung aufrufen und damit die Identifizierung des mobilen Endgerätes durchführen. Der Empfang der ersten Terminalkennung kann durch manuelle oder akustische Eingabe eines Codes am mobilen Endgerät erfolgen, wobei der Code dem Terminal zugeordnet ist (z.B. Aufkleber auf dem Terminal). Alternativ kann die erste Terminalkennung auch mit einer Nachricht empfangen werden, die vom Terminal übermittelt wird sobald sich ein mobiles Endgerät innerhalb einer bestimmten Reichweite befindet. Des Weiteren kann die erste Terminalkennung mittels Scannen eines optischen Codes erfolgen. Dieser Code könnte als Aufkleber auf dem Terminal angebracht sein oder z.B. durch ein Display am Terminal angezeigt werden.

In einer alternativen Ausführungsform kann die Identifizierung des Terminals durch eine Eingabe am Terminal erfolgen, und die Identifizierung des mobilen Endgeräts kann durch Empfang einer ersten Endgerätkennung des mobilen Endgeräts am Terminal erfolgen. Diese Ausführung stellt im Wesentlichen die spiegelbildliche Ausführung der zuvor beschriebenen Ausführungsform dar, so dass die zuvor genannten Möglichkeiten der Identifizierung bzw. des Empfangs hier ebenfalls Anwendung finden können, sofern diese in Hinblick auf den Terminal und/oder das mobile Endgerät Sinn machen. Der Terminal könnte überdies nach einer Aktivierung zudem einen Anfrageruf aussenden, falls keine Bindung hinterlegt ist. Das mobile Endgerät könnte die erste Endgerätkennung in Reaktion auf den Anfrageruf übermitteln. Dies könnte ggfs. nach Autorisierung durch den Nutzer des Endgerätes erfolgen.

Die Bindung könnte durch die Verknüpfung einer zweiten Terminalkennung des Terminals mit einer zweiten Endgerätkennung des mobilen Endgeräts erfolgen. Die zweite Terminalkennung des Terminals kann in einer Ausführungsform mit der ersten Terminalkennung ganz oder teilweise übereinstimmen. Des Weiteren kann die zweite Endgerätkennung des mobilen Endgeräts in einer Ausführungsform mit der ersten Endgerätekennung ganz oder teilweise übereinstimmen. Alternativ können im Rahmen der Bindung nach der Identifizierung weitere charakteristische Daten ausgetauscht werden die sich zur eindeutigen Zuweisung der Kosten eigenen. Der Terminal kann z.B. ein fest eingebautes Navigationsgerät mit Multimediaeigenschaften sein, das über eine eigene SIM-Karte verfügt (Connected Device). In diesem Fall könnten die IMSI des Connected Device als zweite Terminalkennung verwendet werden und die IMSI des mobilen Endgeräts als zweite Endgerätekennung verwendet werden. Die Verknüpfung der zweiten Terminalkennung des Terminals mit der zweiten Endgerätkennung des mobilen Endgeräts könnte in dem Terminal oder in einer Bindungseinheit hinterlegt werden. Die Bindungseinheit könnte dabei z.B. ein Server oder ein Teil eines Servers des Mobilfunkanbieters des Nutzers des mobilen Endgerätes sein. Die Bindungseinheit kann jedes vernetzte Gerät sein, das eine sichere Speicherung der Bindung zum Zwecke der Zuweisung der Kosten zum mobilen Endgerät ermöglicht. Die Bindungseinheit kann vorteilhaft vom Mobilfunkanbieter verwaltet werden. Alternativ, kann die Bindungseinheit auch von einem anderen externen Dienstleister verwaltet werden.

In einer Ausführungsform wird die Verknüpfung und damit die Bindung in dem Terminal hinterlegt. Das Verfahren kann in diesem Fall die weiteren Verfahrensschritte umfassen:
- Automatische Markierung einer Anfrage über den Terminal zur Erbringung der datenbasierten Dienstleistung mit der zweiten Endgerätekennung basierend auf der Verknüpfung;
- Übermittlung der Anfrage zu einer Datenübermittlungseinheit;
- Erbringung der datenbasierten Dienstleistung durch die Datenübermittlungseinheit;
- Zuweisung der Kosten für die datenbasierte Dienstleistung zum mobilen Endgerät basierend auf der zweiten Endgerätekennung.

Eine mittels des Terminals, der in diesem Fall z.B. ein Navigationsgerät mit Multimediafähigkeiten sein könnte, übermittelte Anfrage zur Übermittlung von bestimmten Videodaten wird durch das Navigationsgerät mit der dort hinterlegten Bindung an ein mobiles Endgerät in Form der zweiten Endgerätekennung markiert. Die so mit der Bindung markierte Anfrage wird an eine Datenübermittlungseinheit weitergeleitet. Die Datenübermittlungseinheit kann entweder direkt oder mittelbar durch die Kontaktierung von weiteren Dienstleistern die Videodaten an das Navigationsgerät weiterleiten. Die Datenübermittlungseinheit ist dabei entweder selbst oder durch weiterleiten einer entsprechenden Nachricht, die zumindest die zweite Endgerätekennung umfasst, in der Lage die Kosten für die übertragenen Videodaten dem Nutzer des mobilen Endgerätes zuzuweisen.

In einer Ausführungsform wird die Verknüpfung und damit die Bindung in der Bindungseinheit hinterlegt. Das Verfahren kann in diesem Fall die weiteren Verfahrensschritte umfasst:
- Übermittlung einer mit der zweiten Terminalkennung markierten Anfrage über den Terminal zur Erbringung der datenbasierten Dienstleistung;
- Überprüfung basierend auf der zweiten Terminalkennung seitens einer Datenübermittlungseinheit, ob in der Bindungseinheit eine Bindung hinterlegt ist;
- Erbringung der Dienstleistung mittels der Datenübermittlungseinheit,
- Zuweisung der Kosten für die datenbasierte Dienstleistung zum mobilen Endgerät basierend auf der zweiten Terminalkennung, sofern in der Bindungseinheit eine Bindung hinterlegt ist.

Der Terminal könnte z.B. seitens einer externen Vorrichtung ein Angebot erhalten, ob eine datenbasierte Dienstleistung erbracht werden soll. Ein Fahrzeug mit einem Connected Device könnte sich z.B. in der Nähe einer Waschstraße befinden und von einer automatischen Kontrolleinheit der Waschstraße verschiedene Angebote über eine Autowäsche erthalten, so dass der Nutzer des Fahrzeugs mittels des Displays des Connected Devices oder durch akustische Anweisung (z.B. Angebot 5) eine Anfrage an die automatische Kontrolleinheit stellt, das Angebot 5 anzunehmen (z.B. Autowäsche mit Heißwachs). Die Anfrage wird mir der zweiten Terminalkennung markiert. Die zweite Terminalkennung signalisiert in diesem Fall zugleich, dass eine Bindung in der Bindungseinheit hinterlegt sein könnte, so dass die automatische Kontrolleinheit über die Datenübermittlungseinheit bei der Bindungseinheit erfragt, ob für die zweite Terminalkennung eine Bindung hinterlegt ist. Sofern eine Bindung hinterlegt ist, wird dies der automatischen Kontrolleinheit signalisiert. Dies kann z.B. derart erfolgen, dass die automatische Kontrolleinheit eine standardisierte Bestätigung der Kostenübernahme erhält. Die automatische Kontrolleinheit gibt sodann die Waschstraße für das Fahrzeug frei und die Kosten der Autowäsche werden dem mobilen Endgerät basierend auf der zweiten Terminalkennung zugewiesen. In Abhängigkeit von der Struktur des Datennetzwerk und der einzelnen Einheiten können zusätzliche Informationen (z.B. IP-Adresse, Access Point Name (APN)) übertragen werden, um z.B. die Bindung oder die Möglichkeit der Bindung zu signalisieren und die Kontaktierung der Datenübermittlungseinheit und der Bindungseinheit zu ermöglichen bzw. zu triggern.

Alternativ zu dem zuvor genannten Scenario könnte die Automatische Kontrolleinheit dem Connected Device mit dem Angebot auch ihre APN mitteilen. Das Connected Device schickt darauf eine Nachricht über das kabellose Telefonnetz an die Datenübermittlungseinheit, die sowohl die zweite Terminalkennung als auch die APN der automatischen Kontrolleinheit umfasst. Die Datenübermittlungseinheit prüft anhand der in diesem Fall in die Datenübermittlungseinheit integrierten Bindungseinheit, ob eine Bindung vorliegt. Sofern eine Bindung hinterlegt ist, wird dies der automatischen Kontrolleinheit mittels der APN signalisiert. Dies kann z.B. derart erfolgen, dass die automatische Kontrolleinheit eine standardisierte Bestätigung der Kostenübernahme erhält. Die automatische Kontrolleinheit gibt sodann die Waschstraße für das Fahrzeug frei und die Kosten der Autowäsche werden dem mobilen Endgerät basierend auf der zweiten Terminalkennung zugewiesen.

Die automatische Markierung der Anfrage mit der zweiten Endgerätekennung kann auch in Abhängigkeit von der datenbasierten Dienstleistung erfolgen. So könnte der Terminal anhand einer im Speicher abgelegten Liste feststellen, ob die datenbasierten Dienstleistung in einer Liste aufgeführt ist. Ist die datenbasierten Dienstleistung gelistet, so wird die Anfrage nicht mit der zweiten Endgerätekennung markiert. Auf diese Weise können z.B. Software-Updates des Terminals als datenbasierte Dienstleistung in der Liste aufgeführt sein, wenn diese z.B. pauschal mit dem Kauf des Terminals vorab bezahlt worden sind. Die Markierung mittels der zweiten Endgerätekennung wird in diesem Fall nicht durchgeführt, damit keine Zuweisung der Kosten erfolgt. Anfragen bzgl. anderer datenbasierte Dienstleistungen, wie z.B. das Angebot eines Videoportals, das entgeltlich Videos zum Download zur Verfügung stellt, werden hingegen automatisch mit der zweiten Endgerätekennung markiert, so dass eine Zuweisung der Kosten erfolgen kann.

Alternativ kann die Zuweisung der Kosten für die datenbasierte Dienstleistung basierend auf der zweiten Terminalkennung in Abhängigkeit von der der datenbasierten Dienstleistung zugewiesenen IP-Adresse oder dem der datenbasierten Dienstleistung zugewiesenen Zugriffspunktes (APN) erfolgen. So kann der Terminal verschieden datenbasierte Dienstleistungen wie kostenloses IP-Radio oder einen entgeltlichen Musikdienst anbieten. Der Nutzer wählt die datenbasierte Dienstleistung aus und die mit der zweiten Terminalkennung markierte Anfrage wird an die Datenübermittlungseinheit übermittelt. Die Zuweisung der Kosten erfolgt nun in Abhängigkeit von der IP-Adresse der ausgewählten datenbasierten Dienstleistung. Die Datenübermittlungseinheit überprüft z.B. anhand der APN der datenbasierten Dienstleistung, ob es sich um eine entgeltliche oder unentgeltliche datenbasierte Dienstleistung handelt. Im Falle einer entgeltlichen datenbasierten Dienstleistung wird basierend auf der zweiten Terminalkennung anschließend überprüft, ob in der Bindungseinheit eine Bindung zwischen dem Terminal und dem mobilen Endgerät hinterlegt ist. Die Kosten werden dem mobilen Endgerät zugewiesen, wenn eine Bindung festgestellt wird. Alternativ kann die Datenübermittlungseinheit auch überprüfen, ob die IP-Adresse oder APN in einer Liste abgespeichert ist und die Bindung wird nur überprüft, falls die IP-Adresse oder APN nicht in der Liste abgespeichert ist. Die Kosten werden dem mobilen Endgerät somit in allen Fällen zugewiesen, in denen die IP-Adressen oder APNs nicht in der Liste abgespeichert sind. Die Kosten können dabei die Kosten für die Bereitstellung der Verbindung zu der jeweiligen IP-Adresse oder APN als separate datenbasierte Dienstleistung umfassen, wohingegen die Kosten für die z.B. Freigabe einer Videodatei zusätzlich in Rechnung gestellt werden.

Die Bindung ist an eine Präsenz des mobilen Endgerätes in einer definierten Umgebung des Terminals gebunden sein. Der Terminal könnte z.B. derart eingerichtet sein, dass eine Markierung einer Anfrage zur Erbringung einer datenbasierten Dienstleistung nur erfolgt, wenn sich das mobile Endgerät in Reichweite eines z.B. Bluetooth-Moduls des Terminals befindet. Auf diese Weise wird die Bindung nur aktiviert, wenn das mobile Endgerät in Reichweite des Terminals ist. Alternativ kann auch das mobile Endgerät den Terminal detektieren und eine Freigabenachricht an den Terminal versenden, um die Bindung zu aktivieren. Alternativ kann die Bindung auch automatisch gelöscht werden sobald sich das mobile Endgerät nicht mehr in der definierten Umgebung des Terminals aufhält. Auf diese Weise kann die Gefahr einer Manipulation der Bindung oder eine Nutzung der Bindung durch unautorisierte Personen vermindert werden. Vorteilhaft wäre das automatische Löschen der Bindung insbesondere in solchen Fällen, in denen der Nutzer des mobilen Endgerätes nicht regelmäßig oder nur einmalig in der Nähe des Terminals ist. Dies wäre z.B. bei einem Mietwagen der Fall, der z.B. ein Navigationsgerät aufweist, das nur für die Dauer der Miete an das mobile Endgerät gebunden werden soll.

In einer alternativen Ausführungsform umfasst das Verfahren die zusätzlichen Verfahrensschritte:
- Versendung einer Freigabenachricht an das mobile Endgerät und/oder den Terminal, sobald datenbasierte Dienstleistungen abgerufen werden, deren Kosten aufgrund der Bindung des Terminals an das mobile Endgerät dem mobilen Endgerät zugewiesen werden;
- Erbringung der datenbasierte Dienstleistungen nach Erhalt einer Bestätigungsnachricht vom mobilen Endgerät und/oder Terminal.

Die Datenübermittlungseinheit und/oder die Bindungseinheit können bei der Überprüfung, ob eine Bindung vorliegt oder sobald eine Anfrage eingeht, die eine Bindung eines Terminal an ein mobiles Endgerät signalisiert, eine Freigabenachricht an das mobile Endgerät und/oder den Terminal versenden. Die Freigabenachricht kann z.B. eine SMS umfassen, die an den Terminal und/oder das mobile Endgerät versendet wird. Der Nutzer des mobilen Endgerätes oder des Terminals wird somit darüber informiert, dass eine datenbasierte Dienstleistung angefragt wurde, deren Kosten dem mobilen Endgerät zugewiesen werden sollen. Die SMS kann zusätzliche automatische Antwortfelder enthalten (Bestätigen Ja/Nein), mit denen der Nutzer eine Bestätigungsnachricht an die Datenübermittlungseinheit und/oder Bindungseinheit versenden kann. Die Freigabenachricht und Bestätigungsnachricht ist insbesondere dann nützlich, wenn der Nutzer der datenbasierten Dienstleistung und der Nutzer des mobilen Endgerätes nicht identisch sind. In diesem Fall wäre es vorteilhaft, dass die Freigabenachricht an das mobile Endgerät verschickt wird. Alternativ könnte die Versendung der Bestätigungsnachricht aber auch an die Eingabe eines Autorisierungscodes gebunden sein, um Manipulationen zu erschweren. Des Weiteren könnte die Freigabenachricht dazu benutzt werden, um Details über die angefragte datenbasierte Dienstleistung zu erfahren. So könnte z.B. ein in einem Fahrzeug angebrachtes Multimedia-System von Fahrgästen im Fond dazu genutzt werden, um Videodaten anzufragen. Der Fahrer des Fahrzeugs wird nun mittels der Freigabenachricht über Details der Anfrage mittels des Terminals informiert und kann die Freigabe nun in Abhängigkeit von den Inhalten bestätigen.

In einer weiteren Ausführungsform kann das Verfahren zudem die zusätzlichen Verfahrensschritte umfassen:
- Empfangen einer Übermittlungsanfrage einer Präsentationseinheit durch den Terminal;
- Kopplung der Präsentationseinheit an den Terminal, so dass es der Präsentationseinheit ermöglicht wird über den Terminal datenbasierte Dienstleistungen abzurufen und die mit diesen datenbasierten Dienstleistungen verbundenen Kosten dem mobilen zuzuweisen.

Die Präsentationseinheit kann ein Tablett-Computer, ein Laptop, ein Display oder jedes andere Gerät sein, das datenbasierte Inhalte (Videodaten, Musikdaten etc.) abspielen oder darstellen kann. Einer solchen Präsentationseinheit kann somit über den Terminal der Zugang zu datenbasierten Dienstleistungen ermöglicht werden, ohne dass die Präsentationseinheit selber in der Lage ist, in der jeweiligen Situation selbst mit einer Datenübermittlungseinheit in Verbindung zu treten. Die Präsentationseinheit kann z.B. ein Tablett-Computer sein, den ein Mitfahrer in einem Fahrzeug verwendet. Der Tablett-Computer weist keine eigene SIM-Karte auf, so dass eine Verbindung zum Internet während der Fahrt nicht hergestellt werden kann. Der Tablett-Computer kann aber z.B. durch ein W-LAN, das durch den Terminal (z.B. Navigationsgerät) zur Verfügung gestellt wird, mit dem Internet in Verbindung treten. Der Terminal ermöglicht nun die Weiterleitung einer Anfrage bzgl. datenbasierter Dienstleistungen, wobei die Kosten für die datenbasierte Dienstleistung auf Grund der Bindung zwischen Terminal und mobilen Endgerät (Smartphone des Fahrers) dem mobilen Endgerät zugewiesen werden können. Auf diese Weise können z.B. Kinder im Fond eines Fahrzeugs während einer Reise Unterhaltungsprogramme abrufen. Der Vater oder die Mutter der Kinder, dem oder der das mobile Endgerät gehört erhält, wie zuvor dargestellt, mittels SMS über den Bildschirms des Navigationssystems Informationen über die angeforderten z.B. Videodaten und kann diese durch eine Bestätigungsnachricht freigeben. Im Terminal kann eine Liste mit Präsentationseinheiten und zugehöriger Identifikationsmerkmale hinterlegt sein, um zu verhindern, dass unautorisierte Nutzer datenbasierte Dienstleistungen über den Terminal anfragen können.

Die Erfindung betrifft des Weiteren einen Terminal wobei der Terminal an ein Fahrzeug koppelbar ist, und wobei der Terminal eingerichtet ist, eine Bindung an ein mobiles Endgerät eines Nutzers zu ermöglichen, so dass über den Terminal datenbasierte Dienstleistungen mittels einer kabellosen Verbindung zwischen einer Datenaustauscheinheit des Terminals und einer Datenübermittlungseinheit abgerufen werden können, wobei das mobile Endgerät nicht aktiv in die Datenübermittlung zur Erbringung der datenbasierten Dienstleistung eingebunden ist, und die mit diesen datenbasierten Dienstleistungen verbundenen Kosten dem mobilen Endgerät zugewiesen werden können, wobei die Bindung an eine Präsenz des mobilen Endgerätes in einer definierten Umgebung des Fahrzeugs gebunden ist, wenn der Terminal an das Fahrzeug gekoppelt ist.

Der Terminal kann somit den Zugriff auf datenbasierte Dienstleistung ermöglichen, ohne dass das mobile Endgerät aktiv genutzt wird. Der Terminal ist des Weiteren eingerichtet, alle zuvor beschriebenen auf den Terminal bezogenen Verfahrensschritte durchzuführen.

Die Erfindung betrifft des Weiteren ein System aufweisend einen Terminal, wobei der Terminal an ein Fahrzeug koppelbar ist, ein mobiles Endgerät und eine Datenübermittlungseinheit, wobei das System eingerichtet ist, das mobilen Endgerät und den Terminal zu identifizieren, und das System weiter eingerichtet ist, basierend auf der Identifizierung des mobilen Endgeräts und des Terminals eine Bindung des Terminals an das mobile Endgerät vorzunehmen, wobei die Bindung an eine Präsenz des mobilen Endgerätes in einer definierten Umgebung des Fahrzeugs gebunden ist, wenn der Terminal an das Fahrzeug gekoppelt ist, und das System weiter eingerichtet ist über den Fahrzeugterminal datenbasierte Dienstleistungen mittels einer kabellosen Verbindung zwischen einer Datenaustauscheinheit des Terminals und einer Datenübermittlungseinheit abzurufen , wobei das mobile Endgerät (210) nicht aktiv in die Datenübermittlung zur Erbringung der datenbasierten Dienstleistung eingebunden ist, und die mit diesen datenbasierten Dienstleistungen verbundenen Kosten dem mobilen Endgerät zuzuweisen, wobei die Bindung an eine Präsenz des mobilen Endgerätes in einer definierten Umgebung des Fahrzeugs gebunden ist, wenn der Terminal an das Fahrzeug gekoppelt ist.

Das System ist des Weiteren eingerichtet, alle zuvor beschriebenen auf das System bezogenen Verfahrensschritte durchzuführen. Die Datenübermittlungseinheit kann jede in einem Datennetzwerk verfügbare Rechnereinheit sein die direkt oder über Vermittlungseinheiten mit dem Terminal mittels einer oder mehrerer drahtloser oder drahtgebundener Datenübermittlungstechnologien in Verbindung treten kann. Das System kann zudem eine Bindungseinheit aufweisen, in der die Bindung zwischen dem Terminal und dem mobilen Endgerät hinterlegt sein kann. Die Bindungseinheit kann z.B. eine Datenspeichereinheit sein, die Teil der Datenübermittlungseinheit ist. Die Bindungseinheit kann alternativ ein z.B. unabhängiger Server sein, auf dem die Bindung zwischen dem mobilen Endgerät und dem Terminal gespeichert ist. Die Datenübermittlungseinheit und/oder die Bindungseinheit können z.B. vom Kommunikationsdienstleister zur Verfügung gestellt werden, der für die Kostenabrechnung des mobilen Endgerätes zuständig ist.

### Kurze Beschreibung der Abbildungen

Diese und andere Aspekte der Erfindung werden im Detail in den Abbildungen wie folgt gezeigt.
Fig. 1 zeigt eine Prinzipskizze eines Verfahrens zur Erbringung von datenbasierten Dienstleistungen
Fig. 2 zeigt eine prinzipielle Darstellung der Bindung gemäß einer ersten Ausführungsform
Fig. 3 zeigt eine prinzipielle Darstellung der Bindung gemäß einer zweiten Ausführungsform
Fig. 4 zeigt ein System gemäß einer ersten Ausführungsform
Fig. 5 zeigt ein System gemäß einer zweiten Ausführungsform
Fig. 6 zeigt eine prinzipielle Darstellung der Bindung gemäß einer dritten Ausführungsform
Fig. 7 zeigt eine Ausführungsform eines Terminals

### Detaillierte Beschreibung der Ausführungsbeispiele

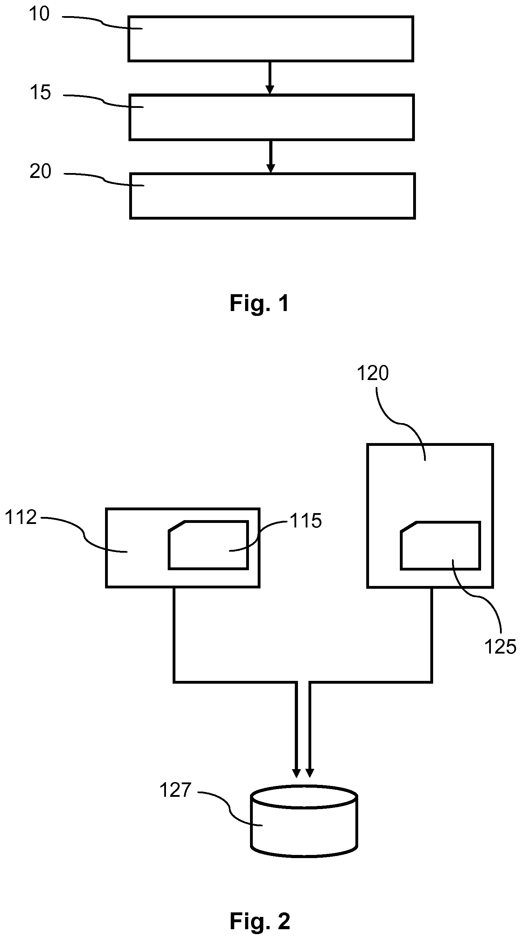

Fig. 1 zeigt eine Prinzipskizze eines Verfahrens zur Erbringung von datenbasierten Dienstleistungen. In Verfahrensschritt 10 wird ein mobiles Endgerät 120 eines Nutzers identifiziert. Das mobile Endgerät 120 kann ein Mobiltelefon, ein Smartphone, ein mobiler Computer oder jedes andere mobile Endgerät sein, dass aufgrund einer Gerätekennung in die Lage versetzt ist, datenbasierte Dienstleistungen in einem oder mehreren miteinander verbundenen kabellosen oder kabelgebundenen Datennetzwerken in Anspruch zu nehmen, die dem Nutzer des mobilen Endgerätes basierend auf der Gerätekennung in Rechnung gestellt werden. In Verfahrensschritt 15 wird ein Terminal 112, 612 identifiziert. Der Terminal 112, 612 kann jedes Gerät sein, über das datenbasierte Dienstleistungen angefordert werden können. Der Terminal 112, 612 kann insbesondere ein Fahrzeugterminal in Form eines Navigationsgerätes oder eines Multimediagerätes sein, das mit einem Fahrzeug koppelbar ist. Die Kopplung kann lösbar sein, so dass der Fahrzeugterminal in verschiedenen Fahrzeugen verwendet werden kann. In Verfahrensschritt 20 erfolgt die Bindung 127 des Terminals 112, 612 an das mobile Endgerät 120. Die Bindung 127 erfolgt in der Form, dass das mobile Endgerät 120 bei der Anforderung von datenbasierten Dienstleistungen mittels des Terminals 112, 612 so eindeutig identifiziert werden kann, dass Kosten, die durch die Inanspruchnahme der datenbasierten Dienstleistungen entstehen, dem mobilen Endgerät 120 oder vielmehr dem Nutzer des mobilen Endgerätes zugewiesen werden können. Der Begriff datenbasierte Dienstleistungen umfasst alle Dienstleistungen, die durch die Übermittlung von Daten durchgeführt oder in Gang gesetzt werden können.

Im Folgenden werden Beispiele beschrieben, wie eine Bindung 127 zwischen einem mobilen Endgerät 120 wie z.B. einem Handy und einem Terminal 112, 612 wie z.B. einem Connected Device in einem Fahrzeug wie einem Auto hergestellt wird.

### Beispiel 1

Die Identifizierung des Handys kann über die Eingabe der Rufnummer des Handys des Nutzers am Connected Device, also als Menüpunkt in der Software des Connected Devices erfolgen. Durch die Eingabe am Connected Device wird gleichzeitig das Connected Device identifiziert. Diese logische Verbindung oder Bindung zwischen dem Handy des Nutzers und der eindeutigen Kennung des Connected Devices wird entweder im Connected Device gespeichert oder via Datenübertragung in einer Datenbank einer Bindungseinheit 130 abgelegt

### Beispiel 2

Es wird eine SMS vom Handy des Nutzers via konkreter Anwendung (APP) am Handy durch Eingabe der eindeutigen Kennung des Connected Devices an das Connected Device verschickt. Diese eindeutige Kennung kann das Connected Device als Menupunkt an seinem Bildschirm anzeigen. Die Bindung 127 zwischen dem Handy des Nutzers und der eindeutigen Kennung des Connected Devices wird in einer Datenbank einer Bindungseinheit 130 oder im Connected Device abgelegt.

### Beispiel 3

Es wird eine SMS vom Handy des Nutzers mittels eines QR-Code generiert, wobei der QR-Code nach Aufruf eines Menupunktes des Connected Devices auf dem Display des Connected Devices angezeigt wird und eine eindeutige Verknüpfung zur SIM des Connected Devices beinhaltet. Die Bindung 127 zwischen dem Handy des Nutzers und der eindeutigen Kennung des Connected Devices wird in einer Datenbank einer Bindungseinheit 130 oder im Connected Device abgelegt.

### Beispiel 4

Es wird eine SMS oder IP-basierte Anforderung vom Handy des Nutzers mittels NFC-Schnittstelle generiert. Nach Aufruf eines Menupunktes des Connected Devices oder permanent wird via NFC eine eindeutige Kennung gesendet, so dass eine App auf dem Handy daraus die benötigte SMS oder IP basierte Anforderung zur Verknüpfung mit dem Connected Device generiert. Die Bindung 127 zwischen dem Handy des Nutzers und der eindeutigen Kennung des Connected Devices wird in einer Datenbank einer Bindungseinheit 130 oder im Connected Device abgelegt.

### Beispiel 5

Es wird eine SMS oder IP-basierte Anforderung vom Handy des Nutzers mittels Bluetooth-Schnittstelle generiert., Nach Aufruf eines Menupunktes des Connected Devices oder permanent wird via Bluetooth (ähnlich der Kopplung beim Freisprechen nur hier mit dem Hintergrund im Handy die SMS oder IP-basierte Anfrage zu generieren) eine eindeutige Kennung gesendet, so dass eine App auf dem Handy daraus die benötigte SMS oder IP-basierte Anfrage zur Verknüpfung mit dem Connected Device generiert. Die Bindung 127 zwischen dem Handy des Nutzers und der eindeutigen Kennung des Connected Devices wird in einer Datenbank einer Bindungseinheit 130 oder im Connected Device abgelegt.

### Beispiel 6

Es wird eine SMS mit konkreter Syntax manuell über das Handy des Nutzers eingegeben (Beispiel sende "Logiclink SIM-Handy zu SIM-ConnectedDevice" an Zielrufnummer). Die Bindung 127 zwischen dem Handy des Nutzers und der eindeutigen Kennung des Connected Devices wird in einer Datenbank einer Bindungseinheit 130 oder im Connected Device abgelegt.

### Beispiel 7

Ein mobiles Device verbindet sich via WLAN mit dem Connected Device. Dieses mobile Device kann ein Device sowohl mit als auch ohne eigene SIM sein, und muss nicht zwingend das mobile Endgerät 120 sein, welches zum Sinne der Abrechnung logisch verbunden wird (z.B. Pad der Tochter nur mit WLAN). Die Eingabe der SIM-Nummer des Handys des Nutzers zum Zweck der Bindung 127 findet auf einer lokal im Fahrzeug via Software des Connected Devices generierten Web-Seite statt. Die logische Verbindung zwischen dem Handy des Nutzers und der eindeutigen Kennung des Connected Devices wird entweder im Connect Device gespeichert oder via Datenübertragung in einer Datenbank einer Bindungseinheit 130 abgelegt.

### Beispiel 8

Ein mobiles Device verbindet sich via WLAN mit dem Connected Device. Dieses mobile Device kann ein Device sowohl mit als auch ohne eigene SIM sein, und muss nicht zwingend das mobile Endgerät 120 sein welches zum Sinne der Abrechnung logisch verbunden wird (z.B. Pad der Tochter nur mit WLAN). Die Eingabe der SIM-Nummer des Handys des Nutzers zum Zweck der Bindung 127 findet in einer APP statt die auf dem mobilen Device läuft und mit dem Connected Devices kommuniziert. Die logische Verbindung oder Bindung 127 zwischen dem Handy des Nutzers und der eindeutigen Kennung des Connected Devices wird entweder im Connect Device gespeichert oder via Datenübertragung in einer Datenbank einer Bindungseinheit 130 abgelegt.

### Beispiel 9

Ein mobiles Device verbindet sich via WLAN mit dem Conneted Device. Dieses mobile Device kann ein Device sowohl mit als auch ohne eigene SIM sein, und muss nicht zwingend das mobile Endgerät 120 sein welches zum Sinne der Abrechnung logisch verbunden wird (z.B. Pad der Tochter nur mit WLAN). Die Eingabe der SIM-Nummer des Handys zum Zweck der Bindung 127 findet auf Web-Seite/landing Page statt die über das WAN Interface des Connected Devices (also Mobilfunk via im Connected Device verbauter SIM) erreicht wird. Die Bindung 127 zwischen dem Handy des Nutzers und der eindeutigen Kennung des Connected Devices wird entweder im Connect Device gespeichert oder via Datenübertragung in einer Datenbank einer Bindungseinheit 130 abgelegt.

### Beispiel 10

Ein mobiles Device verbindet sich via WLAN mit dem Connected Device. Dieses mobile Device kann ein Device sowohl mit als auch ohne eigene SIM sein, und muss nicht zwingend das mobile Endgerät 120 sein welches zum Zwecke der Abrechnung logisch verbunden wird (z.B. Pad der Tochter nur mit WLAN). Die Eingabe der SIM-Nummer des Handys zum Zweck der Bindung 127 findet in einer APP statt, die über das WAN Interface des Connected Devices (also Mobilfunk via im Connected Device verbauter SIM) mit einem externen Server kommuniziert. Die Bindung 127 zwischen dem Handy des Nutzers und der eindeutigen Kennung des Connected Devices wird entweder im Connect Device gespeichert oder via Datenübertragung in einer Datenbank einer Bindungseinheit 130 abgelegt.

Zur weiteren Absicherung des Verfahrens kann eine Autorisierung vorgesehen sein, die im Folgenden anhand von einigen Beispielen beschrieben wird. Es besteht insbesondere die Möglichkeiten der Eingabe einer Autorisierungs-PIN, die via SMS an das Handy des Nutzers geschickt wurde, zur Autorisierung der Abrechnung der erbrachten bzw. zu erbringenden Leistung via Operator Billing. Die Methoden der Eingabe der Autorisierungs-PIN können beliebig mit den Anwendungsfällen zur Herstellung der logischen Bindung gemischt werden, der Bezug zur angestrebten logischen Bindung muss jedoch eindeutig sein.

### Beispiel 11

Eingabe der Autorisierungs-PIN am Connected Device, also als Menüpunkt in der Software des Connected Devices. Die Autorisierungs-PIN für diesen Case wird entweder im Connected Device gespeichert oder via Datenübertragung oder SMS in einer Datenbank z.B. als Teil der Bindungseinheit 130 abgelegt.

### Beispiel 12

Eingabe der Autorisierungs-PIN via konkreter APP am Handy. Die logische Verbindung oder Bindung 127 der SIM des Handys des Nutzers und der SIM des Connected Devices muss durch die App sichergestellt sein, idealerweise durch logische Fortführung der zuvor beschriebenen Verfahren. Die Autorisierungs-PIN für diesen Case wird via Datenübertragung oder SMS in einer Datenbank z.B. als Teil der Bindungseinheit 130 oder im Connected Device abgelegt.

### Beispiel 13

Eine SMS mit konkreter Syntax wird manuell über das Handy des Nutzers (Beispiel sende "Autorisierungs-PIN zu Logiclink "XYZ" an Zielrufnummer) eingegeben. Die Autorisierungs-PIN für diesen Case wird via SMS in einer Datenbank z.B. als Teil der Bindungseinheit 130 oder im Connected Device abgelegt.

### Beispiel 14

Eingabe der Autorisierungs-PIN auf einer lokal im Fahrzeug via Software des Connected Devices generierten Web-Seite. Die Web-Seite wird auf einem mobilen Device dargestellt welches via WLAN mit dem Conneted Device verbunden ist. Die Autorisierungs-PIN für diesen Case wird entweder im Connected Device gespeichert oder via Datenübertragung oder SMS in einer Datenbank z.B. als Teil der Bindungseinheit 130 abgelegt.

### Beispiel 15

Eingabe der Autorisierungs-PIN auf einer APP die mit der Software des Connected Devices kommuniziert. Die App läuft auf einem mobilen Device welches via WLAN mit dem Conneted Device verbunden ist. Die Autorisierungs-PIN für diesen Case wird entweder im Connect Device gespeichert oder via Datenübertragung oder SMS in einer Datenbank z.B. als Teil der Bindungseinheit 130 abgelegt.

### Beispiel 16

Eingabe der Autorisierungs-PIN auf einer Web-Seite/landing Page, die über das WAN Interface des Connected Devices (also Mobilfunk via im Connected Device verbauter SIM) erreicht wird. Die Web-Seite wird auf einem mobilen Device dargestellt, welches via WLAN mit dem Conneted Device verbunden ist. Die Autorisierungs-PIN für diesen Case wird via Datenübertragung oder SMS in einer Datenbank z.B. als Teil der Bindungseinheit 130 oder im Connected Device abgelegt.

### Beispiel 17

Eingabe der Autorisierungs-PIN in einer APP, welche über das WAN Interface des Connected Devices (also Mobilfunk via im Connected Device verbauter SIM) mit einem externen Server kommuniziert. Die APP läuft auf einem mobilen Device welches via WLAN mit dem Conneted Device verbunden ist. Die Autorisierungs-PIN für diesen Case wird via Datenübertragung oder SMS in einer Datenbank z.B. als Teil der Bindungseinheit 130 oder im Connected Device abgelegt.

Zudem kann die Möglichkeit eines aktive Beendens der logischen Bindung an allen Kontaktstellen vorgesehen sein, die auch zur Eingabe der Autorisierungs-PIN geeignet sind.

### Beispiel 18

Aktives Beenden der logischen Bindung am Connected Device, also als Menüpunkt in der Software des Connected Devices.

### Beispiel19

Aktives Beenden der logischen Bindung via konkreter APP am Handy, idealerweise durch logische Fortführung der zuvor beschriebenen Verfahren.

### Beispiel 20

Aktives Beenden der logischen Bindung durch manuell einzugebende SMS mit konkreter Syntax über das Handy des Nutzers (Beispiel sende "Stop Logiclink "XYZ" an Zielrufnummer).

### Beispiel 21

Aktives Beenden der logischen Bindung auf der lokal im Fahrzeug via Software des Connected Devices generierten Web-Seite. Die Web-Seite wird auf einem mobilen Device dargestellt, welches via WLAN mit dem Conneted Device verbunden ist.

### Beispiel 22

Aktives Beenden der logischen Bindung in einer APP die mit der Software des Connected Devices kommuniziert. Die App läuft auf einem mobilen Device, welches via WLAN mit dem Conneted Device verbunden.

### Beispiel 23

Aktives Beenden der logischen Bindung auf einer Web-Seite/landing Page, die über das WAN Interface des Connected Devices (also Mobilfunk via im Connected Device verbauter SIM) erreicht wird.

### Beispiel 24

Aktives Beenden der logischen Bindung in einer APP welche über das WAN Interface des Connected Devices (also Mobilfunk via im Connected Device verbauten SIM) mit einem externen Server kommuniziert. Die App läuft auf einem mobilen Device, welches via WLAN mit dem Conneted Device verbunden ist.

Fig. 2 zeigt eine prinzipielle Darstellung der Bindung 127 gemäß einer ersten Ausführungsform. Ein Terminal 112 weist ein Identifizierungsmodul 115 auf, das eine eindeutige Identifizierung des Terminals 112 ermöglicht. In dem Identifizierungsmodul 115 ist eine eindeutige Terminalkennung (Name und Adresse des Besitzers des Terminals) abgelegt. Ein mobiles Endgerät 120 weist ebenfalls ein Identifizierungsmodul auf, das eine eindeutige Identifizierung des mobilen Endgerätes ermöglicht. In dem Identifizierungsmodul 125 ist eine eindeutige Endgerätekennung abgelegt. Das Identifizierungsmodul 125 ist in diesem Fall eine SIM-Karte und die Endgerätekennung ist die IMSI, die auf der SIM-Karte gespeichert ist. Eine Bindung 127 des Terminal 112 und des mobilen Endgerätes 120 erfolgt dadurch, dass die Terminalkennung und die Endgerätekennung beide im Terminal abgespeichert werden. Der Terminal 112 kann somit die Endgerätekennung zusammen mit der Terminalkennung weitergeben, so dass Kosten für datenbasierte Dienstleistungen, die mittels des Terminals abgerufen werden über die Bindung 127 dem mobilen Endgerät 120 zugewiesen werden können.

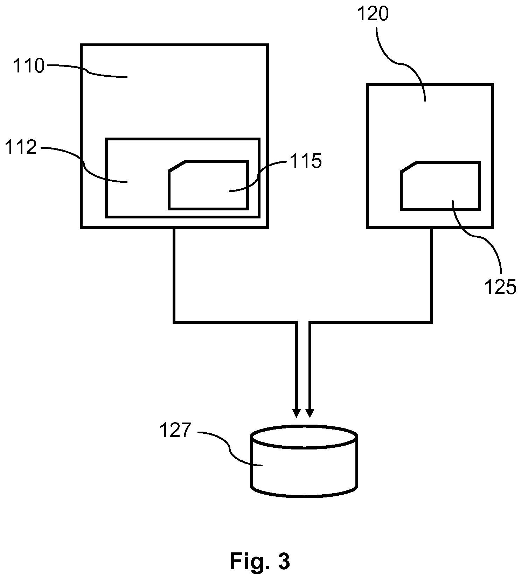

Fig. 3 zeigt eine prinzipielle Darstellung der Bindung 127gemäß einer zweiten Ausführungsform. Ein Terminal 112 ist mit einem Fahrzeug 110 gekoppelt und weist ein Identifizierungsmodul 115 auf, das eine eindeutige Identifizierung des Terminals 112 ermöglicht. Der Terminal ist in diesem Fall ein Connected Device, in dem das Identifizierungsmodul 115 in Form einer SIM-Karte vorhanden ist. Die IMSI auf der SIM-Karte ist eine eindeutige Terminalkennung, die eine Identifizierung des Connected Devices ermöglicht. Ein mobiles Endgerät 120 weist ebenfalls ein Identifizierungsmodul 125 auf, das eine eindeutige Identifizierung des mobilen Endgerätes ermöglicht. In dem Identifizierungsmodul 125 ist eine eindeutige Endgerätekennung abgelegt. Das Identifizierungsmodul 125 ist in diesem Fall eine USIM-Karte und die Endgerätekennung ist die IMSI, die auf der USIM-Karte gespeichert ist. Eine Bindung 127 des Connected Devices und des mobilen Endgerätes 120 erfolgt dadurch, dass die Terminalkennung und die Endgerätekennung beide auf der SIM-Karte des Connected Devices abgespeichert werden. Das Connected Device kann somit die Endgerätekennung zusammen mit der Terminalkennung weitergeben, so dass Kosten für datenbasierte Dienstleistungen, die mittels des Connected Device abgerufen werden, über die Bindung 127 dem mobilen Endgerät 120 zugewiesen werden können.

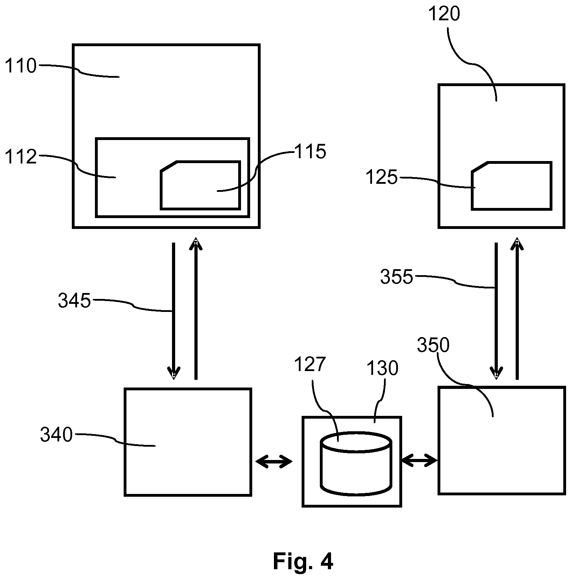

Fig. 4 zeigt ein System gemäß einer ersten Ausführungsform. Ein Terminal 112 ist mit einem Fahrzeug 110 gekoppelt und weist ein Identifizierungsmodul 115 auf, das eine eindeutige Identifizierung des Terminals 112 ermöglicht. Der Terminal ist in diesem Fall ein Connected Device (z.B. multimediafähiges Navigationsgerät), in dem das Identifizierungsmodul 115 in Form einer SIM-Karte vorhanden ist. Die IMSI auf der SIM-Karte ist eine eindeutige Terminalkennung, die eine Identifizierung des Connected Devices ermöglicht. Ein mobiles Endgerät 120 weist ebenfalls ein Identifizierungsmodul 125 auf, das eine eindeutige Identifizierung des mobilen Endgerätes 120 ermöglicht. In dem Identifizierungsmodul 125 ist eine eindeutige Endgerätekennung abgelegt. Das Identifizierungsmodul 125 ist in diesem Fall eine USIM-Karte und die Endgerätekennung ist die IMSI, die auf der USIM-Karte gespeichert ist. Eine Bindung 127 des Connected Devices und des mobilen Endgerätes 120 erfolgt dadurch, dass die Terminalkennung und die Endgerätekennung beide in einer Bindungseinheit 130 abgelegt sind. Das Connected Device kann somit die Terminalkennung zusammen mit einer Adresse der Bindungseinheit 130 mittels Sitzungsdaten 345 an eine Datenübermittlungseinheit 340 weitergeben. Die Datenübermittlungseinheit 340 erfragt bei der Bindungseinheit 130, ob eine Bindung 127 vorliegt. Die Bindungseinheit 130 informiert eine Rechnungseinheit 350, dass in Folge der Bindung dem mobilen Endgerät Kosten zugewiesen werden sollen. Rechnungsdaten 355 oder Rechnungsinformationen werden per SMS oder IP-basiert an das mobile Endgerät 120 weitergeleitet, so dass die Kosten nach Erhalt einer Freigabe-SMS dem mobilen Endgerät zugewiesen werden können. Abschließend werden die Daten bzgl. der datenbasierten Dienstleistung mit Sitzungsdaten 345 von der Datenübermittlungseinheit 340 an das Connected Device übermittelt.

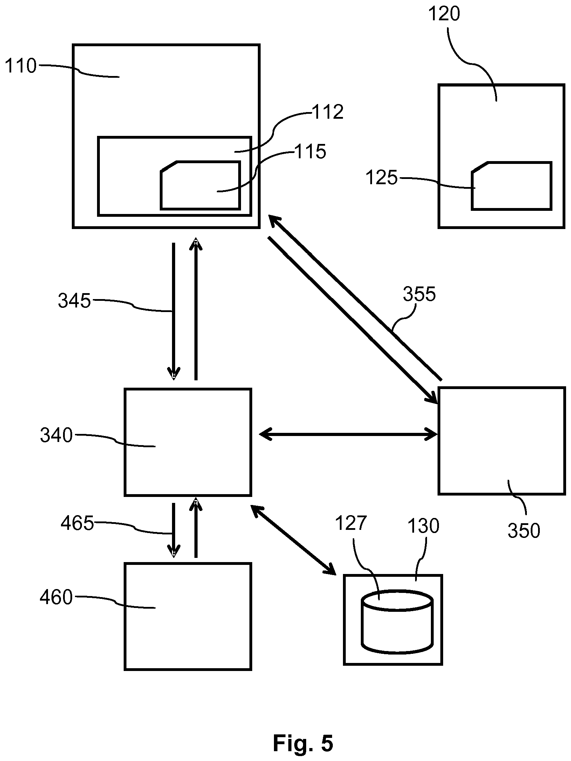

Fig. 5 zeigt ein System gemäß einer zweiten Ausführungsform. Ein Terminal 112 ist mit einem Fahrzeug 110 gekoppelt und weist ein Identifizierungsmodul 115 auf, das eine eindeutige Identifizierung des Terminals 112 ermöglicht. Der Terminal ist in diesem Fall ein Connected Device (tragbares Navigationsgerät mit Multimediafunktionalitäten), in dem das Identifizierungsmodul 115 in Form einer SIM-Karte vorliegt. Die IMSI auf der SIM-Karte ist eine eindeutige Terminalkennung, die eine Identifizierung des Connected Devices ermöglicht. Ein mobiles Endgerät 120 weist ebenfalls ein Identifizierungsmodul 125 auf, das eine eindeutige Identifizierung des mobilen Endgerätes 120 ermöglicht. In dem Identifizierungsmodul 125 ist eine eindeutige Endgerätekennung abgelegt. Das Identifizierungsmodul 125 ist in diesem Fall eine USIM-Karte und die Endgerätekennung ist die IMSI, die auf der USIM-Karte gespeichert ist. Eine Bindung 127 des Connected Devices und des mobilen Endgerätes 120 erfolgt dadurch, dass die Terminalkennung und die Endgerätekennung beide im Speicherbereich einer Bindungseinheit 130 abgelegt sind. Die Bindungseinheit ist z.B. ein Server mit entsprechendem Speicher. Das Connected Device kann somit die Terminalkennung zusammen mit einer Adresse der Bindungseinheit 130 mittels Sitzungsdaten 345 an eine Datenübermittlungseinheit 340 weitergeben. Die Terminalkennung wird aber nur mit der Adresse der Bindungseinheit 130 an die Datenübermittlungseinheit übermittelt, wenn keine Telematik-Daten 465 bei einem Telematik-Dienstleister 460 angefragt werden. Die APN des Telematik-Dienstleisters 460 ist in dem Connected Device gespeichert, so dass eine Eindeutige Zuordnung in Abhängigkeit von den angefragten Daten möglich ist. Die Datenübermittlungseinheit 340 entscheidet nun anhand der Adresse der Bindungseinheit, die eine Bindung 127 signalisiert, ob bei der Bindungseinheit 130 erfragt wird, ob eine Bindung 127 vorliegt. Die Bindungseinheit 130 informiert die Datenübermittlungseinheit 340, dass eine Bindung 127 vorliegt und informiert die Datenübermittlungseinheit 340 über die Adresse einer Rechnungseinheit 350 und ggfs. erforderlicher Authentifizierungsdaten. Die Datenübermittlungseinheit informiert anschließend die Rechnungseinheit 350, dass in Folge der Bindung dem mobilen Endgerät 120 Kosten zugewiesen werden sollen. Rechnungsdaten 355 werden per SMS oder IP-basiert an das Connected Device weitergeleitet. Der Nutzer des Connected Devices kann nun die Zuweisung der Kosten mittels einer Freigabe-SMS an dem Connected Device autorisieren. Des Weiteren werden die Daten bzgl. der datenbasierten Dienstleistung mit Sitzungsdaten 345 von der Datenübermittlungseinheit 340 an das Connected Device übermittelt.

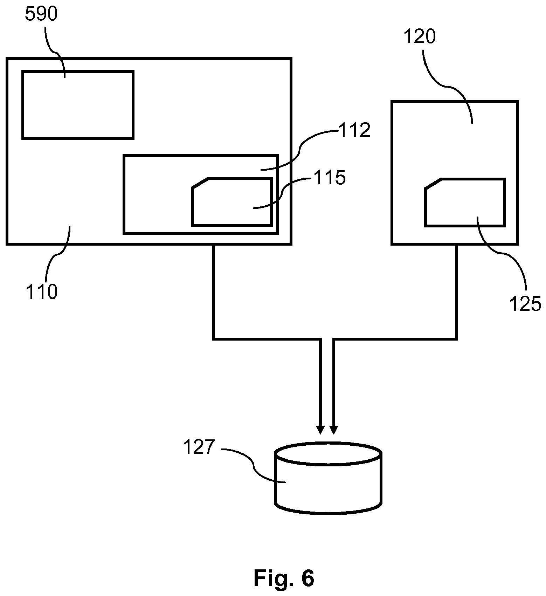

Fig. 6 zeigt eine prinzipielle Darstellung der Bindung gemäß einer dritten Ausführungsform. Ein Terminal 112 ist mit einem Fahrzeug 110 gekoppelt und weist ein Identifizierungsmodul 115 auf, das eine eindeutige Identifizierung des Terminals 112 ermöglicht. Der Terminal 112 ist in diesem Fall ein Connected Device (fest installiertes Multimediasystem mit Navigationsfunktionalität), in dem Identifizierungsmodul 115 in Form einer SIM-Karte vorhanden ist. Die IMSI auf der SIM-Karte ist eine eindeutige Terminalkennung, die eine Identifizierung des Connected Devices ermöglicht. Ein mobiles Endgerät 120 weist ebenfalls ein Identifizierungsmodul 125 auf, das eine eindeutige Identifizierung des mobilen Endgerätes 120 ermöglicht. In dem Identifizierungsmodul 125 ist eine eindeutige Endgerätekennung abgelegt. Das Identifizierungsmodul 125 ist in diesem Fall eine USIM-Karte und die Endgerätekennung ist eine IMSI des mobilen Endgerätes 120, die auf der USIM-Karte gespeichert ist. Eine Bindung 127 des Connected Devices und des mobilen Endgerätes 120 erfolgt dadurch, dass die Terminalkennung und die Endgerätekennung beide auf der SIM-Karte oder anderer Stelle des Connected Devices abgespeichert werden. Das Connected Device kann somit die Endgerätekennung zusammen mit der Terminalkennung weitergeben. Eine Präsentationseinheit 590 ist im Connected Device registriert und per W-LAN, das vom Connected Device zur Verfügung gestellt wird, mit dem Connected Device verbunden. Ein Nutzer der Präsentationseinheit 590 kann nun mittels des Connected Device Musikdaten von einer Datenübermittlungseinheit 340 (nicht dargestellt) herunterladen, die vom Mobilfunkanbieter des Nutzers des mobilen Endgerätes 120 oder einem weiteren Dienstleister zur Verfügung gestellt wird. Anhand der Bindung 127 der Terminalkennung und der Endgerätekennung können die Kosten für die Übermittlung der Musikdaten mittels einer Rechnungseinheit 350, die ebenfalls vom Mobilfunkanbieter des Nutzers oder einem weiteren Dienstleister betrieben wird und mit der Datenübermittlungseinheit 340 in Verbindung steht, dem mobilen Endgerät 120 zugewiesen werden.

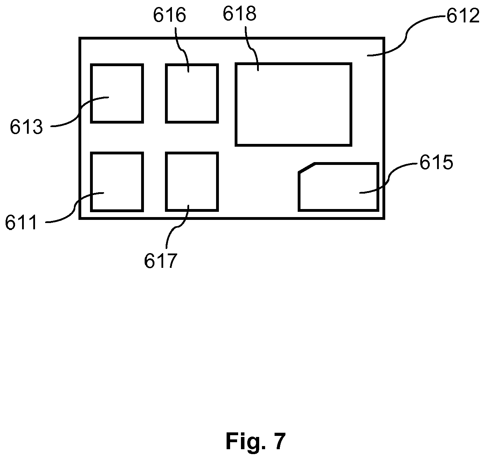

Fig. 7 zeigt eine Ausführungsform eines Terminals 612.Der Terminal umfasst eine Eingabeeinheit 611, mit der z.B. die Bindung durch Eingabe einer Endgerätekennung eines mobilen Endgerätes 120 vorgenommen werden kann. Des Weiteren können mittels der Eingabeeinheit 611 datenbasierte Dienstleistungen über den Terminal 612 angefragt werden. Der Terminal 612 umfasst eine Speichereinheit 613 in der z.B. die Bindung 127 zwischen dem Terminal und dem mobilen Endgerät 120 abgespeichert wird. Die Verwaltung der Funktionalitäten des Terminals 612 wird mittels einer Kontrolleinheit 616 des Terminals 612 durchgeführt. Die Kontrolleinheit 616 umfasst z.B. einen Prozessor, der zur Abarbeitung der zum Betrieb des Terminals 612 benötigen Software geeignet ist. Der Terminal 612 umfasst zudem eine Datenaustauscheinheit 617. Die Datenaustauscheinheit 617 ist eingerichtet den Datenaustausch mit externen Einheiten z.B. mittels GSM, UMTS und oder LTE zu ermöglichen. Des Weiteren ermöglicht die Datenaustauscheinheit 617 den Datenaustauch z.B. mittels W-LAN Technologie mit einer Präsentationseinheit 590. Schließlich umfasst der Terminal noch eine Präsentationseinrichtung 618. Die Präsentationseinrichtung 618 umfasst einen Bildschirm der auch zur Eingabe geeignet sein kann. Mittels der Präsentationseinrichtung 618 können datenbasierte Dienstleistungen dem jeweiligen Nutzer präsentiert werden.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 10: Verfahrensschritt des Identifizierens eines mobilen Endgerätes eines Nutzers
- 15: Verfahrensschritt des Identifizierens eines Terminals
- 20: Verfahrensschritt der Bindung des Terminals an das mobile Endgerät
- 110: Fahrzeug
- 112, 612: Terminal
- 115, 615: Identifizierungsmodul des Terminals
- 120: mobiles Endgerät
- 125: Identifizierungsmodul des mobilen Endgeräts
- 127: Bindung
- 130: Bindungseinheit
- 340: Datenübermittlungseinheit
- 345: Sitzungsdaten
- 350: Rechnungseinheit
- 355: Rechnungsdaten
- 460: Telematik-Dienstleister
- 465: Telematik-Daten
- 590: Präsentationseinheit
- 611: Eingabeeinheit
- 613: Speichereinheit
- 616: Kontrolleinheit
- 617: Datenaustauscheinheit
- 618: Präsentationseinrichtung

## Patentansprüche

1. Ein Verfahren zur Erbringung von datenbasierten Dienstleistungen mittels eines Terminals (112, 612), wobei der Terminal (112, 612) an ein Fahrzeug koppelbar ist, und das Verfahren die Verfahrensschritte umfasst:
- Identifizieren eines mobilen Endgerätes (120) eines Nutzers;
- Identifizieren des Terminals (112, 612);
- Bindung (127) des Terminals (112, 612) an das mobile Endgerät (120), so dass es ermöglicht wird über den Terminal (112, 612) datenbasierte Dienstleistungen mittels einer kabellosen Verbindung zwischen einer Datenaustauscheinheit (617) des Terminals (112, 612) und einer Datenübermittlungseinheit (340) abzurufen, wobei das mobile Endgerät (210) nicht aktiv in die Datenübermittlung zur Erbringung der datenbasierten Dienstleistung eingebunden ist, und die mit diesen datenbasierten Dienstleistungen verbundenen Kosten dem mobilen Endgerät (120) zuzuweisen, wobei die Bindung (127) an eine Präsenz des mobilen Endgerätes (120) in einer definierten Umgebung des Fahrzeugs (110) gebunden ist, wenn der (112, 612) Terminal an das Fahrzeug gekoppelt ist.

2. Das Verfahren nach Anspruch 1 umfassend den weiteren Verfahrensschritt:
- Autorisierung der Bindung (127) durch den Nutzer des Endgerätes (120).

3. Das Verfahren nach Anspruch 1 oder 2, wobei die Identifizierung des mobilen Endgeräts (120) durch eine Eingabe am mobilen Endgerät (120) erfolgt, und die Identifizierung des Terminals (112, 612) durch Empfang einer ersten Terminalkennung des Terminals (112, 612) am mobilen Endgerät (120) erfolgt.

4. Das Verfahren nach Anspruch 1 oder 2, wobei die Identifizierung des Terminals (112, 612) durch eine Eingabe am Terminal (112, 612) erfolgt, und die Identifizierung des mobilen Endgeräts (120) durch Empfang einer ersten Endgerätkennung des mobilen Endgeräts (120) am Terminal (112, 612) erfolgt.

5. Das Verfahren nach einem der vorangehenden Ansprüche, wobei die Bindung (127) durch eine Verknüpfung einer zweiten Terminalkennung des Terminals (112, 612) mit einer zweiten Endgerätkennung des mobilen Endgeräts (120) erfolgt, und die Verknüpfung in dem Terminal (112, 612) oder in einer Bindungseinheit (130) hinterlegt wird.

6. Das Verfahren nach Anspruch 5, wobei die Verknüpfung in dem Terminal (112, 612) hinterlegt wird, und das Verfahren die weiteren Verfahrensschritte umfasst:
- Automatische Markierung einer Anfrage über den Terminal (112, 612) zur Erbringung der datenbasierten Dienstleistung mit der zweiten Endgerätekennung basierend auf der Verknüpfung;
- Übermittlung der Anfrage zu einer Datenübermittlungseinheit (340);
- Erbringung der datenbasierten Dienstleistung mittels der Datenübermittlungseinheit (340);
- Zuweisung der Kosten für die datenbasierte Dienstleistung zum mobilen Endgerät (120) basierend auf der zweiten Endgerätekennung.

7. Das Verfahren nach Anspruch 5, wobei die Verknüpfung in der Bindungseinheit (130) hinterlegt wird, und das Verfahren die weiteren Verfahrensschritte umfasst:
- Übermittlung einer mit der zweiten Terminalkennung markierten Anfrage über den Terminal (112, 612) zur Erbringung der datenbasierten Dienstleistung;
- Überprüfung basierend auf der zweiten Terminalkennung seitens einer Datenübermittlungseinheit (340), ob in der Bindungseinheit (130) eine Bindung (127) hinterlegt ist;
- Erbringung der Dienstleistung mittels der Datenübermittlungseinheit (340);
- Zuweisung der Kosten für die datenbasierte Dienstleistung zum mobilen Endgerät (120) basierend auf der zweiten Terminalkennung, sofern in der Bindungseinheit (130) eine Bindung (127) hinterlegt ist.

8. Das Verfahren nach Anspruch 6, wobei die automatische Markierung der Anfrage mit der zweiten Endgerätekennung in Abhängigkeit von der datenbasierten Dienstleistung erfolgt.

9. Das Verfahren nach Anspruch 6, wobei die automatische Markierung der Anfrage mit der zweiten Endgerätekennung in Abhängigkeit von der der datenbasierten Dienstleistung zugewiesenen IP-Adresse oder dem der datenbasierten Dienstleistung zugewiesenen Zugriffspunktes erfolgt.

10. Das Verfahren nach einem der vorangehenden Ansprüche, umfassend die zusätzlichen Verfahrensschritte:
- Versendung einer Freigabenachricht an das mobile Endgerät (120) und/oder den Terminal (112, 612), sobald datenbasierte Dienstleistungen abgerufen werden, deren Kosten aufgrund der Bindung (127) des Terminals (112, 612) an das mobile Endgerät (120) dem mobilen Endgerät (120) zugewiesen werden;
- Erbringung der datenbasierte Dienstleistungen nach Erhalt einer Bestätigungsnachricht vom mobilen Endgerät (120) und/oder Terminal (112, 612).

11. Das Verfahren nach einem der vorangehenden Ansprüche, umfassend die zusätzlichen Verfahrensschritte:
- Empfangen einer Übermittlungsanfrage einer Präsentationseinheit (590) durch den Terminal (112, 612);
- Kopplung der Präsentationseinheit (590) an den Terminal (112, 612), so dass es der Präsentationseinheit (590) ermöglicht wird über den Terminal (112, 612) datenbasierte Dienstleistungen abzurufen und mittels der Bindung die mit diesen datenbasierten Dienstleistungen verbundenen Kosten dem mobilen Endgerät (120) zuzuweisen.

12. Terminal (112, 612), wobei der Terminal (112, 612) an ein Fahrzeug koppelbar ist, und wobei der Terminal (112, 612) eingerichtet ist, eine Bindung (127) an ein mobiles Endgerät (120) eines Nutzers zu ermöglichen, so dass über den Terminal (112, 612) datenbasierte Dienstleistungen mittels einer kabellosen Verbindung zwischen einer Datenaustauscheinheit (617) des Terminals (112, 612) und einer Datenübermittlungseinheit (340) abgerufen werden können, wobei das mobile Endgerät (210) nicht aktiv in die Datenübermittlung zur Erbringung der datenbasierten Dienstleistung eingebunden ist, und die mit diesen datenbasierten Dienstleistungen verbundenen Kosten dem mobilen Endgerät (120) zuzuweisen, wobei die Bindung (127) an eine Präsenz des mobilen Endgerätes (120) in einer definierten Umgebung des Fahrzeugs (110) gebunden ist, wenn der Terminal (112, 612) an das Fahrzeug gekoppelt ist.

13. Ein System aufweisend einen Terminal (112, 612), wobei der Terminal (112, 612) an ein Fahrzeug koppelbar ist, ein mobiles Endgerät (120) und eine Datenübermittlungseinheit (340), wobei das System eingerichtet ist, das mobilen Endgerät (120) und den Terminal (112, 612) zu identifizieren, und das System weiter eingerichtet ist, basierend auf der Identifizierung des mobilen Endgeräts (120) und des Terminals (112, 612) eine Bindung (127) des Terminals (112, 612) an das mobile Endgerät (120) vorzunehmen, wobei die Bindung (127) an eine Präsenz des mobilen Endgerätes (120) in einer definierten Umgebung des Fahrzeugs (110) gebunden ist, wenn der Terminal (112, 612) an das Fahrzeug gekoppelt ist, und das System weiter eingerichtet ist über den Terminal (112, 612) datenbasierte Dienstleistungen mittels einer kabellosen Verbindung zwischen einer Datenaustauscheinheit (617) des Terminals (112, 612) und einer Datenübermittlungseinheit (340) abzurufen, wobei das mobile Endgerät (210) nicht aktiv in die Datenübermittlung zur Erbringung der datenbasierten Dienstleistung eingebunden ist, und die mit diesen datenbasierten Dienstleistungen verbundenen Kosten dem mobilen Endgerät (120) zuzuweisen, wobei die Bindung (127) an eine Präsenz des mobilen Endgerätes (120) in einer definierten Umgebung des Fahrzeugs (110) gebunden ist, wenn der Terminal (112, 612) an das Fahrzeug gekoppelt ist.

## Claims

1. A method for providing data-based services via a terminal (112, 612), wherein the terminal (112, 612) is couplable to a vehicle, and the method comprises the method steps:
- identifying a mobile terminal device (120) of a user;
- identifying the terminal (112, 612);
- linking (127) the terminal (112, 612) to the mobile terminal device (120), so that it is made possible to call up data-based services via the terminal (112, 612) by means of a wireless connection between a data exchange unit (617) of the terminal (112, 612) and a data transmission unit (340), wherein the mobile terminal device (210) is not actively involved in the data transmission for providing the data-based service, and to assign the costs related to these data-based services to the mobile terminal device (120), wherein the linking (127) is tied to a presence of the mobile terminal device (120) in a defined environment of the vehicle (110) if the terminal (112, 612) is coupled to the vehicle.

2. The method according to Claim 1, comprising the further method step of:
- authorizing the linking (127) by the user of the terminal device (120).

3. The method according to Claim 1 or 2, wherein the identification of the mobile terminal device (120) is effected through an input on the mobile terminal device (120), and the identification of the terminal (112, 612) is effected by receiving a first terminal identifier of the terminal (112, 612) at the mobile terminal device (120).

4. The method according to Claim 1 or 2, wherein the identification of the terminal (112, 612) is effected through an input at the terminal (112, 612), and the identification of the mobile terminal device (120) is effected through receiving of a first terminal device identifier of the mobile terminal device (120) at the terminal (112, 612).

5. The method according to one of the preceding claims, wherein the linking (127) is effected through a link of a second terminal identifier of the terminal (112, 612) with a second terminal device identifier of the mobile terminal device (120), and the link is stored in the terminal (112, 612) or in a linkage unit (130).

6. The method according to claim 5, wherein the link is stored in the terminal (112, 612), and the method comprises the further method steps of:
- automatically marking a request made via the terminal (112, 612) for the provision of the data-based service with the second terminal device identifier based on the link;
- transmitting the request to a data transmission unit (340);
- providing the data-based service by means of the data transmission unit (340);
- assigning the costs for the data-based service to the mobile terminal device (120) based on the second terminal device identifier.

7. The method according to claim 5, wherein the link is stored in the linkage unit (130), and the method comprises the further method steps of:
- transmitting a request marked with the second terminal identifier for the provision of the data-based service via the terminal (112, 612);
- checking, based on the second terminal identifier, on behalf of a data transmission unit (340) whether a link (127) is stored in the linking unit (130);
- providing the data-based service using the data transmission unit (340);
- assigning the costs for the data-based service to the mobile terminal device (120) based on the second terminal identifier, under the condition that a link (127) is stored in the linking unit (130).

8. The method according to claim 6, wherein the automatic marking of the request with the second terminal device identifier occurs depending on the data-based service.

9. The method according to claim 6, wherein the automatic marking of the request with the second terminal device identifier occurs depending on the IP address assigned to the data-bases service or the access point assigned to the data-based service.

10. The method according to one of the preceding claims, comprising the additional method steps of:
- sending an activation message to the mobile terminal device (120) and/or to the terminal (112, 612) as soon as data-based services are called-up, the costs of which, due to the link (127) of the terminal (112, 612) to the mobile terminal device (120), are assigned to the mobile terminal device (120) ;
- providing the data-based services after receiving of a confirmation message from the mobile terminal device (120) and/or from the terminal (112, 612).

11. The method according to one of the preceding claims, comprising the additional method steps of:
- receiving a transmission request of a presentation unit (590) by the terminal (112, 612);
- coupling the presentation unit (590) to the terminal (112, 612) so that the presentation unit (590) is allowed to call-up data-based services via the terminal (112, 612), and, by means of the linking, to assign costs related to these data-based services to the mobile terminal device (120).

12. Terminal (112, 612), wherein the terminal (112, 612) can be coupled to a vehicle, and wherein the terminal (112, 612) is configured to enable a link (127) to a mobile terminal device (120) of a user, so that, via the terminal (112, 612) data-based services can be called up by means of a wireless connection between a data exchange unit (617) of the terminal (112, 612), and a data transmission unit (340), wherein the mobile terminal device (210) is not actively involved in the data transmission for providing the data-based services, and to assign the costs related to these data-based services to the mobile terminal device (120), wherein the linking (127) is tied to a presence of the mobile terminal device (120) in a defined environment of the vehicle (110), if the terminal (112, 612) is coupled to the vehicle.

13. System, comprising a terminal (112, 612), wherein the terminal (112, 612) can be coupled to a vehicle, a mobile terminal device (120) and a data transmission unit (340), wherein the system is configured to identify the mobile terminal device (120) and the terminal (112, 612), and the system is further configured to carry out a linking (127) of the terminal (112, 612) to the mobile terminal device (120), wherein the linking (127) is tied to a presence of the mobile terminal device (120) in a defined environment of the vehicle (110), when the terminal (112, 612) is coupled to the vehicle (110), and the system is further configured to call up data-based services, via the terminal (112, 612), by means of a wireless connection between a data exchange unit (617) of the terminal (112, 612) and a data transmission unit (340), wherein the mobile terminal device (210) is not actively involved in the data transmission for providing the data-based service, and to assign the costs related to these data-based services to the mobile terminal device (120), wherein the linking (127) is tied to a presence of the mobile terminal device (120) in a defined environment of the vehicle (110), if the terminal (112, 612) is coupled to the vehicle.

## Revendications

1. Procédé servant à fournir des prestations de services basées sur des données au moyen d'un terminal (112, 612), dans lequel le terminal (112, 612) peut être couplé à un véhicule, et le procédé comprend les étapes de procédé suivantes :
- identification d'un terminal mobile (120) d'un utilisateur ;
- identification du terminal (112, 612) ;
- liaison (127) du terminal (112, 612) au terminal mobile (120) de sorte qu'il est possible d'appeler par l'intermédiaire du terminal (112, 612) des prestations de services basées sur des données au moyen d'une connexion sans fil entre une unité d'échange de données (617) du terminal (112, 612) et une unité de transmission de données (340), dans lequel le terminal mobile (210) n'est pas impliqué activement dans la transmission de données pour fournir la prestation de services basées sur des données, et d'attribuer les coûts liés auxdites prestations de services basées sur des données au terminal mobile (120), dans lequel la liaison (127) est liée à une présence du terminal mobile (120) dans un environnement défini du véhicule (110) quand le terminal (112, 612) est couplé au véhicule.

2. Procédé selon la revendication 1, comprenant l'autre étape de procédé :
- autorisation de la liaison (127) par l'utilisateur du terminal (120).

3. Procédé selon la revendication 1 ou 2, dans lequel l'identification du terminal mobile (120) est effectuée par une saisie au terminal mobile (120), et l'identification du terminal (112, 612) est effectuée par la réception d'un premier identifiant de terminal du terminal (112, 612) au terminal mobile (120).

4. Procédé selon la revendication 1 ou 2, dans lequel l'identification du terminal (112, 612) est effectuée par une saisie au terminal (112, 612), et l'identification du terminal mobile (120) est effectuée par la réception d'un premier identifiant de terminal du terminal mobile (120) au terminal (112, 612).

5. Procédé selon l'une quelconque des revendications précédentes, dans lequel la liaison (127) est effectuée par une interconnexion d'un deuxième identifiant de terminal du terminal (112, 612) à un deuxième identifiant de terminal du terminal mobile (120), et l'interconnexion est enregistrée dans le terminal (112, 612) ou dans une unité de liaison (130).

6. Procédé selon la revendication 5, dans lequel l'interconnexion est enregistrée dans le terminal (112, 612), et le procédé comprend les étapes de procédé supplémentaires :
- marquage automatique d'une demande par l'intermédiaire du terminal (112, 612) pour fournir la prestation de services basée sur des données avec le deuxième identifiant de terminal basé sur l'interconnexion ;
- transmission de la demande à une unité de transmission de données (340) ;
- fourniture de la prestation de services basée sur des données au moyen de l'unité de transmission de données (340) ;
- attribution des coûts pour la prestation de services basée sur des données au terminal mobile (120) sur la base du deuxième identifiant de terminal.

7. Procédé selon la revendication 5, dans lequel l'interconnexion est enregistrée dans l'unité de liaison (130), et le procédé comprend les étapes de procédé suivantes :
- transmission d'une demande marquée du deuxième identifiant de terminal par l'intermédiaire du terminal (112, 612) pour fournir la prestation de services basée sur des données ;
- vérification sur la base du deuxième identifiant de terminal du côté d'une unité de transmission de données (340) si une liaison (127) est enregistrée dans l'unité de liaison (130) ;
- fourniture de la prestation de services au moyen de l'unité de transmission de données (340) ;
- attribution des coûts pour la prestation de services basée sur des données au terminal mobile (120) sur la base du deuxième identifiant de terminal à condition qu'une liaison (127) est enregistrée dans l'unité de liaison (130).

8. Procédé selon la revendication 6, dans lequel le marquage automatique de la demande du deuxième identifiant de terminal est effectué en fonction de la prestation de services basée sur des données.

9. Procédé selon la revendication 6, dans lequel le marquage automatique de la demande du deuxième identifiant de terminal est effectué en fonction de l'adresse IP attribuée à la prestation de services basée sur des données ou au point d'accès attribué à la prestation de services basée sur des données.

10. Procédé selon l'une quelconque des revendications précédentes, comprenant les étapes de procédé supplémentaires :
- envoi d'un message de validation au terminal mobile (120) et/ou au terminal (112, 612), dès que des prestations de services basées sur des données sont accédés, dont les coûts sont attribués au terminal mobile (120) du fait de la liaison (127) du terminal (112, 612) au terminal mobile (120) ;
- fourniture des prestations de services basées sur des données après la réception d'un message de confirmation du terminal mobile (120) et/ou du terminal (112, 612).

11. Procédé selon l'une quelconque des revendications précédentes, comprenant les étapes de procédé supplémentaires :
- réception d'une demande de transmission d'une unité de présentation (590) par le terminal (112, 612) ;
- couplage de l'unité de présentation (590) au terminal (112, 612) de sorte que cela permet à l'unité de présentation (590) d'appeler par l'intermédiaire du terminal (112, 612) des prestations de services basées sur des données et d'attribuer, au moyen de la liaison, au terminal mobile (120) les coûts liés auxdites prestations de services basées sur des données.

12. Terminal (112, 612), dans lequel le terminal (112, 612) peut être couplé à un véhicule, et dans lequel le terminal (112, 612) est configuré pour permettre une liaison (127) à un terminal mobile (120) d'un utilisateur de sorte que des prestations de services basées sur des données peuvent être appelées par l'intermédiaire du terminal (112, 612) au moyen d'une connexion sans fil entre une unité d'échange de données (617) du terminal (112, 612) et une unité de transmission de données (340), dans lequel le terminal mobile (210) n'est pas impliqué activement dans la transmission de données pour fournir la prestation de services basées sur des données, et pour attribuer au terminal mobile (120) les coûts liés auxdites prestations de services basées sur des données, dans lequel la liaison (127) est liée à une présence du terminal mobile (120) dans un environnement défini du véhicule (110) quand le terminal (112, 612) est couplé au véhicule.

13. Système présentant un terminal (112, 612), dans lequel le terminal (112, 612) peut être couplé à un véhicule, un terminal mobile (120) et une unité de transmission de données (340), dans lequel le système est configuré pour identifier le terminal mobile (120) et le terminal (112, 612), et le système est configuré par ailleurs pour effectuer, sur la base de l'identification du terminal mobile (120) et du terminal (112, 612), une liaison (127) du terminal (112, 612) au terminal mobile (120), dans lequel la liaison (127) est liée à une présence du terminal mobile (120) dans un environnement défini du véhicule (110) quand le terminal (112, 612) est couplé au véhicule, et le système est configuré par ailleurs pour appeler, par l'intermédiaire du terminal (112, 612), des prestations de services basées sur des données au moyen d'une connexion sans fil entre une unité d'échange de données (617) du terminal (112, 612) et une unité de transmission de données (340), dans lequel le terminal mobile (210) n'est pas impliqué activement dans la transmission de données pour fournir la prestation de services basée sur des données et pour attribuer au terminal mobile (120) les coûts liés auxdites prestations de services basées sur des données, dans lequel la liaison (127) est liée à une présence du terminal mobile (120) dans un environnement défini du véhicule (110) quand le terminal (112, 612) est couplé au véhicule.
